# EUROPEAN PATENT SPECIFICATION

(11) **EP 0 791 406 B1**
(45) Date of publication and mention of the grant of the patent: **01.12.1999**
(21) Application number: 97102444.3
(22) Date of filing: 14.02.1997
(51) Int. Cl.: B06B 1/10, F16H 33/06

(54) **Device for torsionally vibrating a rotating shaft**
Gerät zur Erzeugung von Drehvibrationen bei einer rotierenden Welle
Dispositif vibrateur torsionnel pour un arbre rotatif

(30) Priority: 20.02.1996 IT PD960010 U
(43) Date of publication of application: 27.08.1997
(73) Proprietor: Holmac S.a.s. di Gastaldi Christian & C., 35020 Padova (IT)
(72) Inventor: Salviato, Tiziano, 30031 Dolo (Prov. of Verona) (IT)
(74) Representative: Modiano, Guido, Dr.-Ing.

(56) References cited:
- EP-A- 0 732 153
- FR-A- 775 014
- FR-A- 1 148 842
- GB-A- 418 783
- US-A- 2 005 974

## Description

The present invention relates to a device for subjecting a shaft to a combined simple rotation and alternating rotation of limited extent about its own axis.

The device can be applied particularly, but not exclusively, to a mechanical plant uprooting system.

In order to remove plants from soil it is in fact conventionally necessary to make an appropriate sod of said soil remain with the roots.

This operation, known as balling and burlapping, currently entails use of a curved blade which is subjected to a combined simple rotation and alternating rotation of limited extent about its own axis.

The simple rotation, combined with the alternating vibrating motion, allows the blade to easily penetrate the soil and to isolate the sod from said soil.

Both movements are actuated by corresponding actuation means which can be constituted, merely by way of example, by a hydraulic motor for the rotary motion and by a generator of torsional oscillations for the vibrating motion, as disclosed by example by EP-A-0 732 153. The known device has springs arranged diametrically opposite with respect to a shaft that is coupled to a generator of torsional vibrations. The springs are rigidly coupled between first supporting elements that rotate with the shaft and second supporting elements that are rigidly coupled to a gear system that is fully mounted on the shaft.

The main problem affecting currently commercially available devices resides in the breakages that occur in the elements that associate the blade supporting shaft with the actuation means and by the considerable dimensions of the devices.

A principal aim of the present invention is to provide a device for subjecting a shaft to a combined simple rotation and alternating rotation of limited extent about its own axis which is strong and is in any case not subject to fatigue failure of elements during use.

Accordingly, an object of the present invention is to provide a device which can be conveniently associated with equipment for performing the balling and burlapping of plants.

Another object of the present invention is to provide a device which is structurally simple and can be produced with conventional equipment and facilities.

Another object is to provide a compact device.

Another object of the present invention is to provide a device the structure whereof requires a smaller number of constructive elements than required for current devices, with a consequent cost reduction.

This aim, these objects, and others which will become apparent hereinafter are achieved by a device for subjecting a shaft to a combined simple rotation and alternating rotation of limited extent about its own axis, characterized in that it comprises two supporting plates which rotate with a shaft coupled to a vibration generator and, between said plates, a part of a gear system which rotates freely with respect to said shaft and is associated with rotation actuation means, two first slotted holes being formed in each one of said plates so that they are diametrically opposite with respect to said shaft, said slotted holes being arranged, upon assembly, at second slotted holes formed in said gear system, elastic compression means being rigidly coupled between said first and said second slotted holes.

Further characteristics and advantages of the present invention will become apparent from the following detailed description of an embodiment thereof, illustrated only by way of non-limitative example in the accompanying drawings, wherein:
figure 1 is a perspective view of a device according to the invention;
figure 2 is a perspective view of a detail of the device of figure 1;
figures 3, 4, and 5 are orthographic projection views of the detail of figure 2, shown in three different operating steps;
figure 6 is a partially sectional orthographic projection view of the device of figure 1.

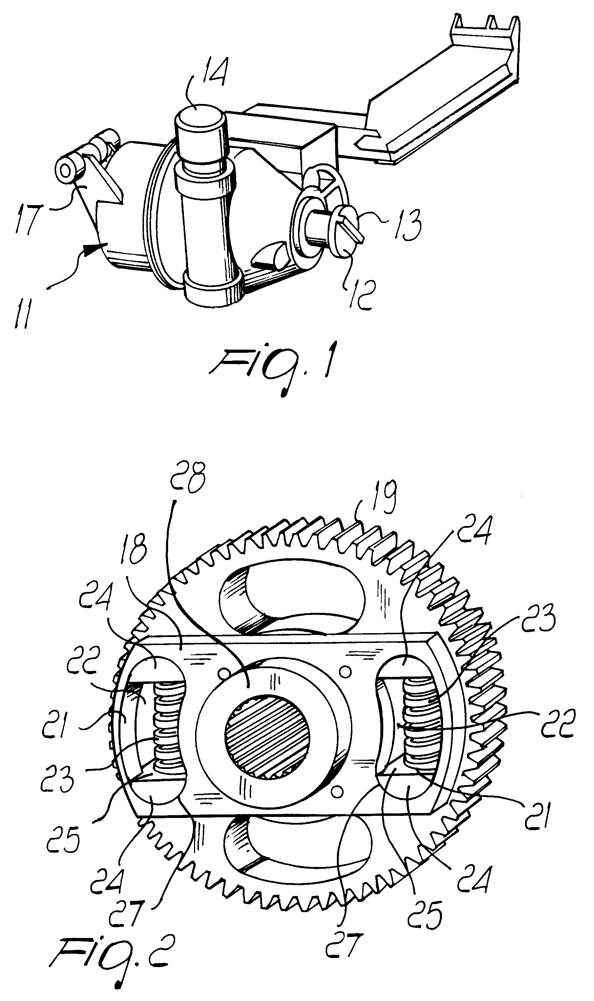

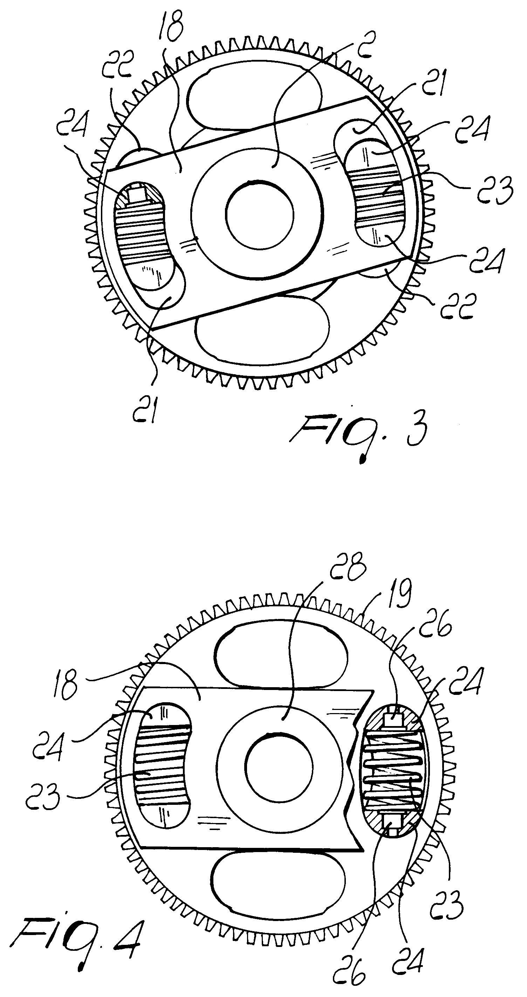

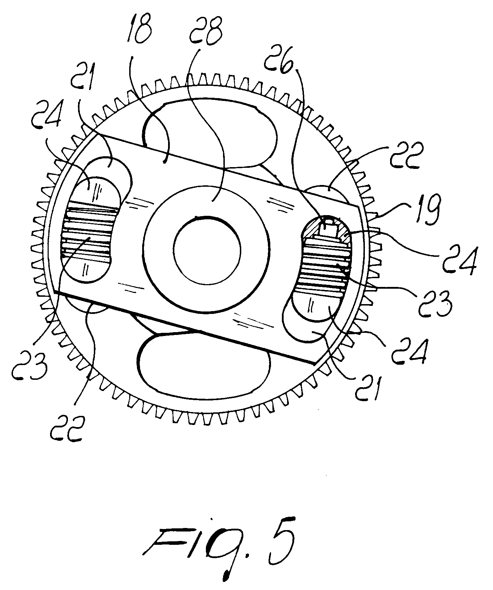

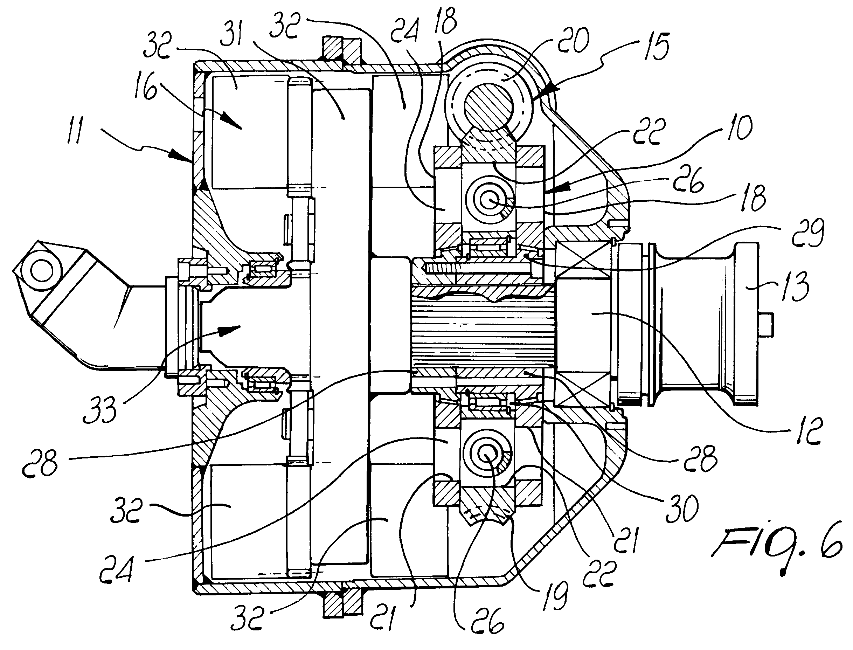

With particular reference to figures 1 to 6, a device for subjecting a shaft to a combined simple rotation and alternating rotation of limited extent about its own axis according to the invention is generally designated by the reference numeral 10.

The device 10 is contained in a housing 11.

In this case, said device 10 moves a shaft 12 on the head 13 of which a curved blade, not shown in the figures, is conveniently fixed.

More specifically, the shaft 12 is subjected to a combined simple rotary motion by means of a hydraulic motor 14 and of a worm-gear reduction unit generally designated by the reference numeral 15.

The shaft 12 is also subjected to an alternating rotation of limited extent by means of a torsional vibration generator, generally designated by the reference numeral 16.

The device 10, the reduction unit 15, and the generator 16 are all accommodated within the same housing 11, which is in turn supported by means of brackets 17 by a vehicle which is not illustrated.

The simultaneous application of the simple rotation and of the alternating rotation of the shaft 12 is possible indeed by virtue of the device 10 according to the invention, which kinematically connects the reduction unit 15 to said shaft 12, allowing appropriately damped oscillations therebetween.

The device 10 comprises two supporting plates 18 which rotate together with the shaft 12; between said plates a ring gear 19 is provided which belongs to the reduction unit 15.

The ring gear 19 rotates freely with respect to the shaft 12 and is associated with rotation actuation means, constituted by the hydraulic motor 14, the power whereof is transmitted by means of a worm gear 20 which, together with said ring gear 19, constitutes the reduction unit 15.

First slotted holes 21 are formed in each one of the plates 18 so that they are diametrically opposite from each other with respect to the shaft 12; upon assembly, said first slotted holes are arranged so as to correspond to second slotted holes 22 formed in the ring gear 19.

Elastic compression means are rigidly coupled between the first holes 21 and the second holes 22 so as to rest thereon with a slight pre-loading force, as specified hereafter.

In this embodiment, the elastic means are constituted by two helical springs 23, the ends of each spring being associated with corresponding shaped elements 24 which are arranged transversely in abutment with respect to two first holes 21 and with respect to a corresponding second hole 22.

Each one of the shaped elements 24 has a flat surface 25, wherein there is provided a seat 26 for a corresponding end of the corresponding helical spring 23, and a curved surface 27, which is shaped complementarily to the surfaces that form the first holes 21 and the second hole 22 against which it abuts.

More specifically, the median region of the curved surface 27 abuts against the surface that forms the corresponding second hole 22, whilst the lateral regions abut against the surfaces that form the corresponding first holes 21.

In this case, the first holes 21 and the second holes 22 are both shaped longitudinally substantially like a circular arc.

In this case, each one of the plates 18 is monolithic with respect to a cylindrical and axially perforated body 28, the inner surface whereof is shaped so as to form a splined coupling with the shaft 12.

The bodies 28 of the plates 18 are also rigidly fixed to each other by means of threaded elements 29.

In this case, one of the bodies 28 also rotatably supports the ring gear 19 by means of bearing systems 30.

In this embodiment, the torsional vibration generator 16 is substantially constituted by a rocker-like element 31, which has a splined coupling with the shaft 12 and the arms whereof rotatably support, at their ends, rotating masses 32 which are rotated by a geared transmission generally designated by the reference numeral 33.

In practice it has been observed that the present invention has achieved its intended aim and objects.

Fatigue tests have in fact shown that part failures no longer occur.

For an equal power rating, dimensions are smaller than in conventional devices.

It should also be noted that the springs always act by compression and never by traction, this being more adapted to their structural characteristics.

The constructive simplicity of the present invention, which facilitates any maintenance work and production assembly, should also be noted.

In practice, the materials employed, so long as they are compatible with the contingent use, as well as the dimensions, may be any according to the requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A device for subjecting a shaft to a combined simple rotation and alternating rotation of limited extent about its own axis, characterized in that it comprises two supporting plates (18) which rotate with a shaft (12) coupled to a vibration generator (16) and, between said plates (18), a part (19) of a gear system (15) which rotates freely with respect to said shaft (12) and is associated with rotation actuation means (14), two first slotted holes (21) being formed in each one of said plates (18) so that they are diametrically opposite with respect to said shaft (12), said first slotted holes (21) being arranged, upon assembly, so as to correspond to second slotted holes (22) formed in said gear system (15), elastic compression means (23) being rigidly coupled between said first (21) and said second slotted holes (22).

2. A device according to claim 1, characterized in that said elastic means comprise two helical springs (23), the ends of each spring being associated with corresponding shaped elements (24) which are arranged transversely in abutment with respect to the surfaces which form two respective first holes (21), which correspond to two related said plates (18) and are mutually aligned upon assembly, and with respect to the surface that forms a respective second hole (22).

3. A device according to claim 2, characterized in that each one of said shaped elements (24) has a flat surface (25), wherein there is provided a seat (26) for a corresponding end of the related helical spring (23), and a curved surface (27), which is shaped complementarily to the surfaces that form said first holes (21) and said second hole (22) against which it abuts, the median region of said curved surface (27) abutting against the surface that forms the corresponding second hole (22), the lateral regions abutting against the surfaces that form the corresponding first holes (21).

4. A device according to one or more of the preceding claims, characterized in that said first holes (21) and said second holes (22) are both shaped longitudinally like a circular arc.

5. A device according to one or more of the preceding claims, characterized in that each one of said supporting plates (18) is monolithically associated with a cylindrical body (28) which is perforated axially and the inner surface whereof is shaped so as to form a splined coupling with said shaft (12).

6. A device according to one or more of the preceding claims, characterized in that said gear system (15) is constituted by a worm-gear reduction unit constituted by a worm gear (20) which meshes with a ring gear (19) interposed between said plates (18).

7. A device according to one or more of the preceding claims, characterized in that said supporting plates (18) are rigidly fixed to each other with respect to their respective bodies (28) by means of threaded elements (29).

8. A device according to one or more of the preceding claims, characterized in that at least one of the two bodies (28) related to said supporting plates (18) rotatably supports said ring gear (19) by means of bearing systems (30).

9. A device according to one or more of the preceding claims, characterized in that it is contained inside a single housing (11) together with said reduction unit (15) and with said generator (16).

## Patentansprüche

1. Vorrichtung zum Beaufschlagen einer Welle mit einer kombinierten Einzel- und Wechseldrehung begrenzten Grades um ihre Achse, dadurch **gekennzeichnet**, daß sie zwei Trägerplatten (18) enthält, die mit einer mit einem Schwingungsgenerator (16) gekoppelten Welle (12) drehen, daß zwischen den Trägerplatten (18) ein Teil (19) eines Getriebesystems (15) angeordnet ist, welches gegenüber der Welle (12) frei drehbar und einer Drehbetätigungsvorrichtung (14) zugeordnet ist, daß in jeder Trägerplatte (18) zwei erste Langlöcher (21) einander hinsichtlich der Welle (12) diametral einander gegenüberliegend angeordnet sind, daß die ersten Langlöcher (21) beim Zusammenbau der Vorrichtung so angeordnet werden, daß sie auf zweite Langlöcher (22) in dem Getriebesystem (15) ausgerichtet sind, und daß elastische Kompressionselemente (23) zwischen die ersten (21) und die zweiten Langlöcher (22) starr gekoppelt sind.

2. Vorrichtung nach Anspruch 1, dadurch **gekennzeichnet**, daß die elastischen Mittel zwei Schraubenfedern (23) sind, deren Enden jeweils Formelementen (24) zugeordnet sind, welche quer an den Flächen anliegen, die jeweils zwei erste Langlöcher (21) bilden, den beiden einander entsprechenden Trägerplatten (18) zugeordnet sind und beim Zusammenbau gegenseitig und gegenüber der jeweils ein zweites Langloch (22) bildenden Fläche ausgerichtet sind.

3. Vorrichtung nach Anspruch 2, dadurch **gekennzeichnet**, daß jedes Formelement (24) eine ebene Fläche (25) hat, die einen Sitz (26) für ein Ende der zugeordneten Schraubenfeder (23) und eine gekrümmte Fläche (27) hat, die komplementär zu den Flächen ausgebildet ist, die die ersten Langlöcher (21) und die zweiten Langlöcher (22) bilden, an denen sie anliegt, daß der mittlere Abschnitt der gekrümmten Fläche (27) an der das entsprechende zweite Langloch (22) bildenden Fläche anliegt, und daß die Endabschnitte an den Flächen anliegen, die die ersten Langlöcher (21) bilden.

4. Vorrichtung nach einem oder mehreren der vorhergehenden Ansprüche, dadurch **gekennzeichnet**, daß die ersten Langlöcher (21) und die zweiten Langlöcher (22) kreisbogenförmig ausgebildet sind.

5. Vorrichtung nach einem oder mehreren der vorhergehenden Ansprüche, dadurch **gekennzeichnet**, daß jede Trägerplatte (18) monolithisch einem zylindrischen Körper (28) zugeordnet ist, der eine axiale Öffnung hat und dessen Innenfläche so ausgebildet ist, daß sie eine Keilkupplung mit der Welle (12) bildet.

6. Vorrichtung nach einem oder mehreren der vorhergehenden Ansprüche, dadurch **gekennzeichnet**, daß das Getriebesystem (15) eine Schneckenrad-Untersetzungseinheit mit einem Schneckenrad (20) ist, das in ein Ringzahnrad (18) zwischen den Trägerplatten (18) eingreift.

7. Vorrichtung nach einem oder mehreren der vorhergehenden Ansprüche, dadurch **gekennzeichnet**, daß die Trägerplatten (18) starr an ihren Körpern (28) mittels Gewinden (29) miteinander verbunden sind.

8. Vorrichtung nach einem oder mehreren der vorhergehenden Ansprüche, dadurch **gekennzeichnet**, daß mindestens einer der beiden Körper (28) der Trägerplatten (18) das Ringzahnrad (19) mit Lagersystemen (30) drehbar trägt.

9. Vorrichtung nach einem oder mehreren der vorhergehenden Ansprüche, dadurch **gekennzeichnet**, daß sie in einem Einzelgehäuse (11) gemeinsam mit der Untersetzungseinheit (15) und dem Schwingungsgenerator (16) untergebracht ist.

## Revendications

1. Dispositif pour soumettre un arbre à une rotation alternative et à une rotation simple combinées d'une étendue limitée autour de son propre axe,
caractérisé en ce qu'il comprend deux plaques de support (18) qui tournent avec un arbre (12) couplé à un générateur de vibrations (16) et, entre lesdites plaques (18), une pièce (19) d'un système de transmission (15) qui tourne librement par rapport audit arbre (12) et est associée à des moyens d'actionnement en rotation (14), deux premiers trous oblongs (21) étant formés dans chacune desdites plaques (18) de sorte qu'ils sont diamétralement opposés par rapport audit arbre (12), lesdits premiers trous oblongs (21) étant agencés, lors de l'assemblage, de façon à correspondre avec des seconds trous oblongs (22) formés dans ledit système de transmission (15), des moyens de compression élastiques (23) étant rigidement coupés entre lesdits premiers (21) et lesdits seconds (22) trous oblongs.

2. Dispositif selon la revendication 1,
caractérisé en ce que lesdits moyens élastiques comprennent deux ressorts hélicoïdaux (23), les extrémités de chaque ressort étant associées à des éléments façonnés correspondants (24) qui sont agencés transversalement en butée par rapport aux surfaces que forment les deux premiers trous respectifs (21), qui correspondent auxdites deux plaques concernées (18) et sont mutuellement alignés, lors de l'assemblage, et par rapport à la surface que forme un second trou respectif (22).

3. Dispositif selon la revendication 2,
caractérisé en ce que chacun desdits éléments façonnés (24) présente une surface plate (25) dans laquelle il est prévu un siège (26) pour une extrémité correspondante du ressort hélicoïdal concerné (23), et une surface courbée (27), qui est conformée de façon complémentaire aux surfaces que forment lesdits premiers trous (21) et ledit second trou (22) contre quoi il vient en butée, la région médiane de ladite surface courbée (27) butant contre la surface que forme le second trou correspondant (22), les régions latérales butant contre les surfaces que forment les premiers trous correspondants (21).

4. Dispositif selon l'une ou plusieurs des revendications précédentes,
caractérisé en ce que lesdits premiers trous (21) et lesdits seconds trous (22) sont tous conformés longitudinalement en un arc de cercle.

5. Dispositif selon l'une ou plusieurs des revendications précédentes,
caractérisé en ce que chacune desdites plaques de support (18) est associée, de façon monolithique, à un corps cylindrique (28) qui est perforé axialement et dont la surface interne est façonnée pour former un accouplement cannelé avec ledit arbre (12).

6. Dispositif selon l'une ou plusieurs des revendications précédentes,
caractérisé en ce que ledit système de transmission (15) est constitué par une unité de réduction à vis sans fin, constituée par une vis sans fin (20) qui s'engrène avec une couronne dentée (19) disposée entre lesdites plaques (18).

7. Dispositif selon l'une ou plusieurs des revendications précédentes,
caractérisé en ce que lesdites plaques de support (18) sont rigidement fixées l'une à l'autre par rapport à leurs corps respectifs (28) par l'intermédiaire d'éléments filetés (29).

8. Dispositif selon l'une ou plusieurs des revendications précédentes,
caractérisé en ce qu'au moins un des deux corps (28) relatifs auxdites plaques de support (18), supporte de façon rotative ladite couronne dentée (19) par l'intermédiaire de systèmes à palier (30).

9. Dispositif selon l'une ou plusieurs des revendications précédentes,
caractérisé en ce qu'il est contenu dans un boîtier unique (11), ainsi que ladite unité de réduction (15) et ledit générateur (16).
